# FASCICULE DE BREVET EUROPEEN

(11) **EP 4 302 082 B1**
(45) Date de publication et mention de la délivrance du brevet: **15.04.2026**
(21) Numéro de dépôt: 22705450.9
(22) Date de dépôt: 02.02.2022
(51) Int. Cl.: G01N 27/22, B32B 17/00, B60H 1/00, B60J 1/00

(54) **ENSEMBLE COMPRENANT UN VITRAGE AVEC AU MOINS UN CAPTEUR D'HUMIDITÉ CAPACITIF ET DES MOYENS DE TRAITEMENT ÉLECTRONIQUES**
ANORDNUNG MIT EINER VERGLASUNG MIT MINDESTENS EINEM KAPAZITIVEN FEUCHTIGKEITSSENSOR UND ELEKTRONISCHEN VERARBEITUNGSMITTELN
ASSEMBLY COMPRISING A WINDOW PANE WITH AT LEAST ONE CAPACITIVE HUMIDITY SENSOR AND ELECTRONIC PROCESSING MEANS

(30) Priorité: 03.03.2021 FR 2102059
(43) Date de publication de la demande: 10.01.2024
(73) Titulaire: Saint-Gobain Sekurit France, 60150 Thourotte (FR)
(72) Inventeur: BOTTOIS, Clément, 60200 COMPIEGNE (FR); BOUILLET, Fabien, 60200 COMPIEGNE (FR); CRUX, Noël Christian, 60750 CHOISY AU BAC (FR)
(74) Mandataire: Saint-Gobain Recherche
(86) Numéro de dépôt international: PCT/FR2022/050195
(87) Numéro de publication internationale: WO 2022/184988

(56) Documents cités:
- WO-A1-2007/006781
- FR-A1- 2 934 051
- US-A1- 2003 080 871
- US-A1- 2014 026 652
- US-A1- 2018 022 320
- US-A1- 2018 372 664
- RIVADENEYRA ALMUDENA ET AL: "Printed electrodes structures as capacitive humidity sensors: A comparison", SENSORS AND ACTUATORS A: PHYSICAL, ELSEVIER BV, NL, vol. 244, 9 April 2016 (2016-04-09), pages 56 - 65, XP029538709, ISSN: 0924-4247, DOI: 10.1016/J.SNA.2016.03.023
- LI Y ET AL: "Humidity sensors based on polymer solid electrolytes: investigation on the capacitive and resistive devices construction", SENSORS AND ACTUATORS B: CHEMICAL, ELSEVIER BV, NL, vol. 77, no. 3, 10 July 2001 (2001-07-10), pages 625 - 631, XP004250717, ISSN: 0925-4005, DOI: 10.1016/S0925-4005(01)00768-7

## Description

L'invention concerne un ensemble tel que défini dans la revendication 1.

L'invention sera plus particulièrement décrite quant à un vitrage de véhicule sans toutefois y être limitée.

Il est connu d'équiper les vitrages de véhicules, en particulier le pare-brise, de capteurs, notamment de capteurs d'humidité. Les capteurs d'humidité ont pour but de fournir leurs informations à une unité de commande électronique qui est apte à contrôler automatiquement le système de chauffage du véhicule. Le système de chauffage d'un véhicule est communément dénommé par le sigle CVC (pour les initiales des termes en français « chauffage, ventilation et climatisation ») ou HVAC (pour les initiales des termes en anglais « heating, ventilation and air-conditioning » et utilisé couramment dans le langage français). Le contrôle automatique du système de chauffage évite au conducteur de le régler manuellement. En effet, la commande manuelle n'est pas optimale car elle peut aisément être associée à un gaspillage d'énergie, un vitrage de véhicule pouvant par exemple être chauffé pour son dégivrage plus que nécessaire, ou lorsque la buée se trouve déjà sur le vitrage, la mise en fonctionnement manuelle généralement combinant du chauffage et de la ventilation pour ôter la buée rapidement engendre une consommation importante d'énergie. Au contraire, la commande automatique permet d'être plus économe en énergie, et présente l'avantage pour l'utilisateur de ne rien avoir à gérer.

On distingue deux types de capteurs d'humidité capacitifs, le capteur d'humidité capacitif de détection qui informe que de la buée se trouve déjà sur le vitrage, et le capteur capacitif de prédiction du phénomène d'humidité.

Le capteur d'humidité capacitif de détection comporte deux électrodes qui présentent à la surface du vitrage une allure de chemins électriquement conducteurs par exemple en forme de peigne, et sont espacées l'une de l'autre en étant électriquement isolées l'une de l'autre par l'espace les séparant. Le capteur d'humidité capacitif est basé sur la mesure de la capacité relative entre les deux électrodes, la présence d'humidité sur le vitrage du véhicule modifiant la capacité. L'unité de commande électronique convertit la capacité en une valeur d'humidité relative. En fonction de la valeur d'humidité relative mesurée en temps réel, l'unité de commande électronique met ou non en fonctionnement le HVAC.

Quant au capteur d'humidité capacitif prédictif, il présente les mêmes éléments que le capteur capacitif de détection, à savoir deux électrodes espacées, et il comporte en outre une couche hygroscopique qui recouvre entièrement la surface des deux électrodes. On entend dans la suite de la description par « recouvre entièrement la surface des électrodes », le fait que la couche de recouvrement forme une surface de recouvrement dont la périphérie est circonscrite aux électrodes hormis aux points de connexion électrique des électrodes. Lorsque l'humidité varie, les propriétés diélectriques de la couche hygroscopique changent, de même que la capacité du capteur. On déduit une humidité relative de la valeur de capacité du capteur. En couplant cette humidité relative à une mesure de température (via un capteur de température), on en déduit la proximité ou non du point de rosée, le point de rosée correspondant à la formation de buée. En fonction de la valeur estimée d'humidité relative et de la température, si l'on se rapproche du point de rosée, l'unité de commande électronique mettra en fonctionnement le HVAC, permettant par cette configuration automatisée d'économiser encore davantage en énergie.

Généralement, les vitrages comportent soit un capteur d'humidité capacitif de détection, soit un capteur d'humidité capacitif prédictif, car l'utilisation de deux capteurs d'humidité sur un même vitrage présentant l'inconvénient de l'augmentation du coût de fabrication et d'avoir deux types de signaux différents à traiter. Or, le capteur de détection est indispensable, car il est en particulier nécessaire lors du démarrage du véhicule si de la buée est déjà présente ou si de la buée apparaît très rapidement sur le vitrage, tandis que le capteur prédictif est très utile pour une régulation optimale du HVAC afin d'économiser au mieux l'énergie.

Le document US 2003/0080871 A1, par exemple, décrit un capteur destiné à détecter l'humidité sur le pare-brise d'un véhicule. Ce capteur comprend un capteur d'humidité capacitif et un capteur de pluie capacitif. Une structure polymère sur le capteur d'humidité capacitif absorbe l'humidité.

L'invention a donc pour but de proposer un ensemble comprenant un vitrage et des moyens de traitement électroniques , le vitrage comprenant au moins un capteur d'humidité capacitif, qui ne présente pas les inconvénients précités, le vitrage étant conçu pour détecter l'humidité dès qu'elle est présente sur le vitrage, mais également, avant toute apparition d'humidité, de la prédire de façon à optimiser le pilotage du système de chauffage, et cela sans affecter le coût de fabrication du vitrage ni complexifier le traitement des informations mesurées.

L'ensemble de la présente invention est défini dans la revendication indépendante 1. D'autres modes de réalisation préférés sont définis dans les revendications dépendantes.

Le capteur d'humidité capacitif comporte un revêtement hygroscopique (couche absorbante d'humidité) qui recouvre partiellement les deux électrodes (une partie des électrodes est recouverte par le revêtement hygroscopique et une autre partie des électrodes n'est pas recouverte). En particulier, les électrodes cheminent dans une direction longitudinale selon deux lignes respectives en vis-à-vis et ont une partie de leur longueur recouverte par le revêtement hygroscopique, tandis que l'autre partie de longueur est dépourvue de revêtement hygroscopique.

Selon une caractéristique, chaque électrode comporte un point de connexion électrique (pour alimenter électriquement chaque électrode et la relier à l'ECU), et le revêtement hygroscopique (procurant la fonction prédictive) se situe du côté des points de connexion électrique des électrodes (tandis que la partie des électrodes non recouverte (procurant la fonction de détection) se situe à l'opposé des points de connexion électrique). En variante, la partie des électrodes non recouverte peut se situer du côté des points de connexion électrique et le revêtement hygroscopique se situe à l'opposé des points de connexion électrique.

De préférence, une seule zone en continu selon une partie de la longueur des deux électrodes est recouverte par un revêtement hygroscopique. Le recouvrement présente la forme d'une surface pleine s'étendant selon une partie de la longueur des électrodes et selon au moins toute la distance séparant les bords longitudinaux les plus extérieurs des deux électrodes combinées dans la direction orthogonale à la direction longitudinale des deux électrodes. La surface de recouvrement forme par exemple un rectangle en dépassant des bords longitudinaux extérieurs des électrodes. Le dépassement au-delà des électrodes dans la direction orthogonale à la direction longitudinale permet de bien englober les bords longitudinaux extérieurs des électrodes. Ce dépassement de recouvrement au-delà des électrodes est par exemple de 5 mm pour prendre en compte une tolérance de 2 ou 3 mm selon le procédé de dépôt du revêtement hygroscopique.

De manière inattendue, le revêtement hygroscopique qui se trouve uniquement sur une certaine partie des électrodes ne perturbe pas la détection de l'humidité par la partie des électrodes non recouvertes par la couche de revêtement hygroscopique lorsque de la buée apparaît sur le vitrage. Il n'y a bien qu'un seul signal qui est transmis aux moyens de traitement électroniques puisque seul un couple d'électrodes agencées de manière capacitive n'est utilisé. Tant que la buée est inexistante sur le vitrage, la valeur de la capacité mesurée augmente uniquement en fonction de l'eau que peut absorber la couche hygroscopique, et lorsque la buée apparaît, la capacité mesurée augmente encore mais selon une variation plus importante. C'est l'ampleur de ce changement de valeur de la capacité en fonction de l'humidité relative qui est destinée à être analysée par les moyens de traitement électroniques à partir d'un seul signal mesuré dans le temps.

Selon une caractéristique, les électrodes présentent une épaisseur dans la direction orthogonale au plan du vitrage comprise dans une gamme de 5 à 20 µm, de préférence au-dessus de 8 µm. On entend par « épaisseur dans la direction orthogonale au plan du vitrage», la hauteur de dépôt sur le vitrage du revêtement électriquement conducteur. Avantageusement, le revêtement hygroscopique présente une épaisseur (dimension orthogonale au plan du vitrage) qui est comprise dans une gamme de 5 à 50 µm, de préférence de 10 à 20 µm. Le revêtement hygroscopique est plus épais que l'épaisseur des électrodes.

Le revêtement hygroscopique s'étend sur une longueur des électrodes qui correspond de 25% à 75 % de la longueur des électrodes, en particulier qui correspond à 50% de la longueur des électrodes. Les électrodes présentent chacune la même longueur. La « longueur » d'une électrode au sens de l'invention s'entend par l'extension longitudinale de l'électrode par rapport à la surface verrière (dimension longitudinale et non dimension linéaire avec les méandres). La longueur d'une électrode débute de l'endroit où commence le recouvrement par la couche hygroscopique (côté point de connexion électrique) jusqu'à la terminaison de l'électrode à l'opposé de la couche hygroscopique (et donc à l'opposé du point de connexion électrique). Les deux dimensions des électrodes dans le plan du vitrage seront adaptées pour procurer une détection suffisante. La longueur des électrodes pourra être par exemple dans une gamme de 3 à 7 cm, et la distance séparant les bords longitudinaux les plus extérieurs des électrodes pourra être par exemple dans une gamme de 1 à 3 cm. La distance séparant les points de connexion électrique du début de la longueur des électrodes (début de la couche de recouvrement) sera adaptée en fonction de l'emplacement du capteur sur le vitrage ; cette distance n'a pas d'influence sur les mesures.

Avantageusement, le revêtement hygroscopique est une couche polymérique à base d'alcool polyvinylique (PVA), ou de polyvinylpyrrolidone (PVP), ou de polyamide(s), éventuellement comprenant en outre un électrolyte tel que du polystyrène sulfonate de sodium (PSSD), ou du chlorure de sodium (NaCl) ou du benzènedisulfonate de disodium (MBSD), ou du dioctyl sulfosuccinate de sodium (DOSS NA). L'électrolyte dans la composition de la couche de revêtement hygroscopique permet en particulier d'améliorer la sensibilité à l'humidité du capteur capacitif, ce qui procure une information prédictive plus en avance dans le temps.

Le revêtement hygroscopique peut être déposé par différentes techniques, par exemple par des applicateurs de films du type applicateur à spirale (« bar coater » en anglais), par des applicateurs à rouleau, partampographie, sérigraphie ou pulvérisation. Si la composition a été diluée dans de l'eau ou dans du solvant pour son application, il sera nécessaire de la sécher après application (par passage dans une étuve ou sous des radiations infrarouges, ou encore par soufflage d'air chaud).

Selon une autre caractéristique, les deux électrodes sont à base d'encre électriquement conductrice ou de pâte électriquement conductrice telle que de la pâte de carbone ou de la pâte à base d'argent, notamment déposée par sérigraphie ou impression, comme les fils chauffants ou fils d'antenne déposés habituellement sur un vitrage. En variante, les deux électrodes peuvent être un revêtement électriquement conducteur transparent tel qu'une encre transparente électriquement conductrice déposée par impression. Dans une autre variante, le revêtement électriquement conducteur transparent est par exemple une couche électriquement conductrice à base d'un oxyde conducteur transparent (TCO), telle que du type revêtement chauffant, comme de l'ITO (oxyde d'indium et d'étain), de préférence la couche étant déposée par pulvérisation cathodique assistée par champ magnétique et l'espace entre les deux électrodes qui constitue une zone d'isolement électrique étant réalisé par décapage laser. Le procédé de dépôt des deux électrodes sera notamment adapté en fonction de la nature du matériau des électrodes.

Les électrodes sont imbriquées l'une dans l'autre tout en étant espacées, en formant des peignes ou des spirales ou des serpentins ou des formes géométriques avec des méandres.

La largeur (direction dans le plan du vitrage) de chaque électrode est par exemple dans une gamme comprise entre 200 et 500 µm. Une largeur de 250 µm peut être préférée, elle permet d'optimiser (minimiser) l'encombrement du capteur. La largeur de chaque électrode sera fonction de la longueur de l'électrode. Par exemple la largeur sera de 250 µm pour une longueur de 3,5 cm, et sera de 500 µm pour une longueur de 7 cm. Quant à la distance entre les électrodes, lesdites électrodes sont espacées avec le même écartement selon toute leur longueur. L'espace entre les deux électrodes est dans une gamme comprise entre 200 et 500 µm.

Le vitrage est notamment un vitrage de véhicule, en particulier de véhicule automobile en particulier un véhicule automobile, ledit capteur d'humidité capacitif à fonctions prédictive et de détection étant agencé sur la face du vitrage pour laquelle la prédiction et la détection d'humidité sont souhaitées. Le capteur d'humidité capacitif à fonctions prédictive et de détection peut être agencé sur la face interne du vitrage (celle destinée à être à l'intérieur de l'habitacle du véhicule) ou sur la face externe (celle en contact avec l'environnement extérieur au véhicule). Deux capteurs d'humidité capacitifs à fonctions prédictive et de détection peuvent être agencés, respectivement, l'un sur la face externe du vitrage et l'autre sur la face interne. Le vitrage peut être un vitrage simple ou feuilleté. Le capteur d'humidité n'est en tout cas pas à l'intérieur du vitrage, par exemple n'est pas à l'intérieur d'un vitrage feuilleté. Le capteur d'humidité est en contact direct avec l'air ambiant dont l'humidité est à détecter (air de l'environnement extérieur ou intérieur du véhicule).

L'invention est relative à un ensemble comportant un vitrage tel que décrit ci-dessus et des moyens électroniques de traitement tels qu'une unité de commande électronique de véhicule, les moyens électroniques de traitement étant aptes à analyser les valeurs de capacité reçues dudit capteur d'humidité capacitif à fonctions prédictive et de détection pour détecter le risque de formation de buée sur le vitrage et la présence de buée sur le vitrage, en particulier les moyens électroniques de traitement étant aptes à calculer la dérivée de la fonction mathématique de la capacité en fonction de l'humidité relative et à analyser cette dérivée en détectant le changement de valeur de la dérivée (dans le temps). La fonction mathématique de la capacité en fonction de l'humidité relative est une droite. La dérivée correspond à l'ampleur de la variation de la capacité par rapport à la variation d'humidité relative. En particulier, lorsque les moyens électroniques de traitement détectent un premier changement de valeur de la dérivée, c'est-à-dire un premier changement de pente de la droite par rapport à une droite initiale de pente nulle (et de capacité initiale de valeur peu significative ou inférieure à une valeur seuil minimale), lesdits moyens électroniques de traitement détectent alors un risque de formation de buée, et lorsqu'ils détectent un second changement de valeur de la dérivée, c'est-à-dire un second changement de pente de la droite par rapport à la première pente, ils détectent la présence de buée.

En fonction des changements de valeurs de la dérivée et de la valeur de la capacité et donc de l'humidité relative, les moyens électroniques de traitement sont aptes à agir de manière automatisée sur le HVAC et sa régulation. Un capteur de température n'est pas indispensable avec le capteur d'humidité capacitif de l'invention, contrairement à l'état de la technique qui combine nécessairement un capteur de température avec un capteur d'humidité capacitif prédictif. Toutefois, la présence d'un capteur de température permettra d'être plus précis dans le contrôle du HVAC.

La présente invention est maintenant décrite à l'aide d'exemples uniquement illustratifs et nullement limitatifs de la portée de l'invention, et à partir des illustrations jointes, dans lesquelles :
- [Fig. 1] ou figure 1 représente une vue schématique d'un vitrage comprenant un capteur d'humidité capacitif. L'ensemble représenté sur la figure 1 est conforme à la présente invention.
- [Fig. 2] ou figure 2 représente une vue d'un exemple de réalisation d'un capteur d'humidité capacitif.
- [Fig. 3] ou figure 3 illustre une vue partielle d'une autre forme des électrodes du capteur d'humidité capacitif.
- [Fig. 4] ou figure 4 est encore une variante de forme des électrodes.
- [Fig. 5] ou figure 5 est encore une variante de forme des électrodes.
- [Fig. 6] ou figure 6 illustre une vue schématique de l'évolution de la capacité en fonction de l'humidité relative pour le capteur d'humidité capacitif de la figure 2 ainsi que pour deux capteurs comparatifs, respectivement, de détection seul et de prédiction seul.

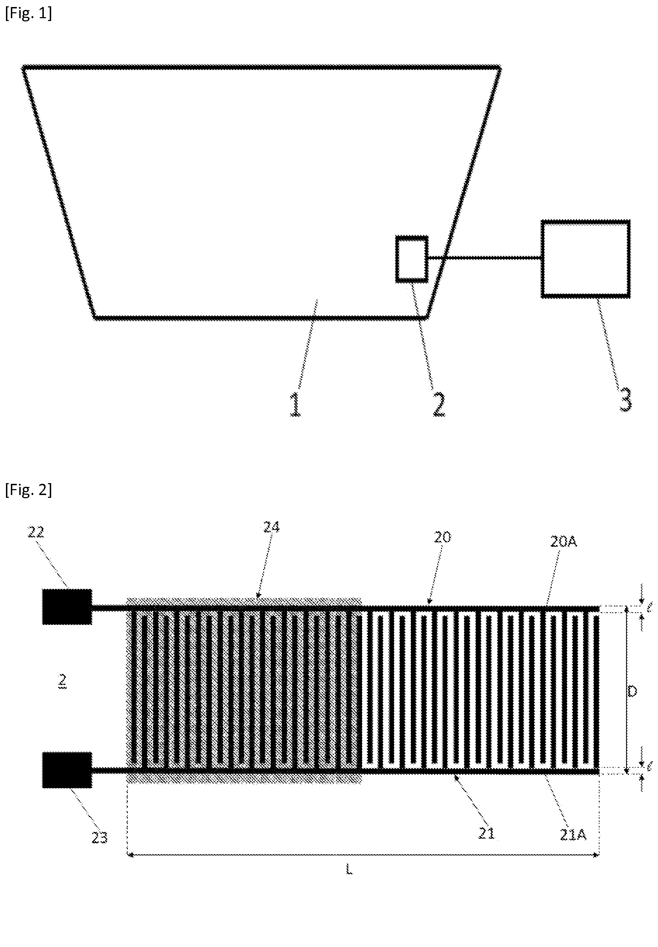

Le vitrage 1 illustré sur la figure 1, par exemple un vitrage de véhicule automobile, comporte un capteur d'humidité capacitif 2 qui est à la fois à fonction de détection de condensation ou de buée sur le vitrage, et à fonction de prédiction de risque de buée sur le vitrage. En un seul capteur d'humidité capacitif sont ainsi réunies selon l'invention deux fonctions, celle de prédiction et celle de détection. Dans un même véhicule, le capteur d'humidité capacitif 2 peut être apposé sur plusieurs des vitrages du véhicule pour renseigner de la présence d'humidité et du risque d'humidité associés à chaque vitrage comprenant un tel capteur d'humidité capacitif 2.

Le capteur d'humidité capacitif 2 est destiné à être connecté électriquement à des moyens de traitement électroniques 3 tels que l'unité de commande électronique 3 (ECU) qui est intégrée dans le véhicule (dans le système électrique de bord ou l'électronique du véhicule). Les informations mesurées par le capteur d'humidité capacitif 2 sont destinées à être transmises à l'unité de commande électronique 3 pour leur traitement électronique.

L'unité de commande électronique 3 pilote différents équipements du véhicule dont le système HVAC. En fonction des informations du capteur d'humidité capacitif 2 et du résultat de traitement électronique des informations, l'unité de commande électronique 3 est apte à déclencher de manière automatisée le HVAC si le risque de formation de condensation est détecté, ou si de la buée ou du givre est déjà présent et est détecté sur le vitrage, et à réguler le HVAC selon l'évolution de la variation de capacité mesurée en fonction de l'humidité relative.

Comme montré sur la figure 2, le capteur d'humidité capacitif 2 comporte deux électrodes 20 et 21 s'étendant selon une direction longitudinale, chacune ayant un point de connexion électrique 22 et respectivement 23. Les points de connexion électrique 22 et 23 des électrodes sont agencés en regard. Le capteur d'humidité capacitif 2 comporte en outre un revêtement hygroscopique 24 constitué d'une couche en matériau polymérique absorbant l'humidité, ci-après dit couche hygroscopique 24.

Les deux électrodes 20 et 21 cheminent en vis-à-vis parallèlement et sont espacées en étant électriquement isolées l'une par rapport à l'autre.

Chaque électrode 20, 21 est en un matériau électriquement conducteur, par exemple à base de pâte d'argent et de frittes de verre avec de l'ordre de 80 à 85 % d'argent. Le matériau électriquement conducteur a par exemple été déposé par sérigraphie.

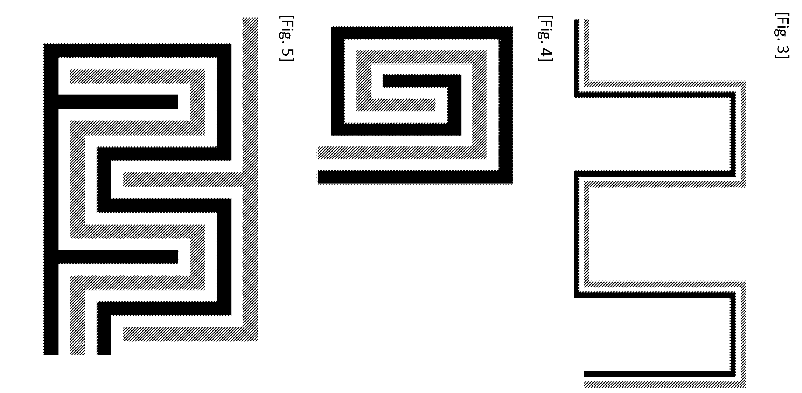

Les électrodes 20 et 21 (voir figure 2) sont en forme de deux peignes agencés en regard et imbriqués l'un dans l'autre sans se toucher. D'autres variantes que le mode de réalisation en peigne sont envisageables telles que celles en serpentin (figure 3) ou en spirale (figure 4), ou encore selon une autre géométrie avec méandres (figure 5).

La longueur L de chaque électrode (figure 2), considérée depuis le début de la couche hygroscopique 24 jusqu'à la terminaison de chaque électrode à l'opposé du point de connexion électrique 22 23, est par exemple de 7 cm. Chaque électrode 20, 21 forme sur sa longueur L une ligne électriquement conductrice en forme de peigne.

La distance D (figure 2) séparant les bords longitudinaux les plus extérieurs 20A et 21A des deux électrodes 20 et 21 combinées est par exemple de 2,5 cm.

L'espacement entre les électrodes 20 et 21 est constant sur toute la longueur des électrodes. L'espacement est par exemple de 250 µm.

La largeur ℓ(figure 2) de chaque électrode (dimension dans le plan du vitrage) est ici de 500 µm. Cette largeur est en correspondance avec la longueur L de l'électrode. En particulier, si la longueur de l'électrode est divisée par deux, la largeur ℓ est divisée par deux.

La couche hygroscopique 24 recouvre partiellement les électrodes, et pour la partie qu'elle recouvre, elle est telle que les électrodes sont noyées dans ladite couche. L'épaisseur de la couche (selon la direction orthogonale au plan du vitrage) est de 20 µm dans l'exemple de la figure 2.

La couche hygroscopique 24 recouvre donc une partie de la longueur L des électrodes 20 et 21. Le revêtement hygroscopique s'étend sur une longueur des électrodes qui correspond de 25% à 75 % de la longueur des électrodes, en particulier qui correspond à 50% de la longueur des électrodes. La couche hygroscopique 24 s'étend dans la direction longitudinale des électrodes selon une longueur partielle des électrodes 20 et 21. La longueur de la couche hygroscopique 24 correspond dans le présent exemple de la figure 2 à la moitié de la longueur des électrodes 20 et 21. Dans cet exemple, la couche hygroscopique 24 s'étend sur une longueur de 3,5 cm.

La couche hygroscopique 24 s'étend dans la direction orthogonale à la direction longitudinale selon une largeur qui correspond au moins à la distance de séparation du bord longitudinal extérieur 20A de la première électrode 20 au bord longitudinal extérieur opposé 21A de la seconde électrode 21.

De préférence, la couche hygroscopique 24 dépasse en largeur vers l'extérieur du capteur d'humidité capacitif 2 au-delà des bords longitudinaux extérieurs 20A et 21A de sorte à recouvrir parfaitement les électrodes. La largeur de dépassement est par exemple de 5 mm.

La capacité entre les électrodes 20 et 21 est régulièrement mesurée et l'information est communiquée à l'unité de traitement et de commande électronique 3. L'unité de traitement et de commande électronique 3 fonctionne dès que le véhicule est mis en route. L'unité de commande électronique 3 enregistre les données de mesure du capteur d'humidité capacitif 2 ; elle enregistre les valeurs de la capacité au cours du temps. Par exemple, la fréquence d'échantillonnage est de 20 mesures par seconde. Comme la présence d'humidité influe sur la capacité entre les électrodes 20 et 21, l'unité de commande électronique 3 est apte à traiter les valeurs de la capacité, ses changements (la variation de capacité) et son évolution dans le temps, et d'en déduire l'humidité relative (pourcentage). L'unité de commande électronique 3 a été calibrée en usine pour être apte à déduire la correspondance entre la variation de capacité et l'humidité relative. L'unité de commande électronique 3 est apte, en fonction de l'évolution de la capacité en fonction de l'humidité relative, à prédire la formation de buée et à détecter la buée. En particulier, l'humidité est en premier lieu détectée grâce à la présence de la couche hygroscopique 24 bien avant que de la condensation ne se soit formée sur le vitrage, ce qui permet d'anticiper le déclenchement du HVAC.

L'unité de commande électronique 3 comporte un microprocesseur qui est apte à traiter les informations reçues et à exécuter des commandes, à partir d'algorithmes appropriés de traitement et de contrôle.

L'unité de commande électronique 3 est apte à traiter, c'est-à-dire à analyser les valeurs de la capacité dans le temps, et en fonction du changement et de l'évolution des valeurs de la capacité en fonction de l'humidité relative, est apte à prédire le risque de présence de buée sur le vitrage et à détecter la buée lorsqu'il y en a. Dans la représentation mathématique de l'évolution de la capacité en fonction de l'humidité relative, la fonction (la courbe) est une droite. L'unité de commande électronique 3 est apte à calculer la pente de cette droite au cours du temps en fonction de la succession des valeurs de capacité mesurées. En fonction de la pente et de la valeur de la capacité à l'instant t, l'unité de commande électronique 3 en déduit le risque de buée ou la présence de buée. L'analyse par l'unité de commande électronique 3 du risque de formation de buée ou de la présence de buée porte sur l'analyse de la rupture de pente de la courbe de la capacité en fonction de l'humidité relative. Le changement de pente est équivalent au changement de la valeur de la dérivée de la fonction de la capacité en fonction de l'humidité relative. L'unité de commande électronique 3 est apte à calculer la dérivée de la fonction de la capacité dépendante de l'humidité relative.

A partir de la mise en fonctionnement de l'unité de commande 3, l'analyse est fonction de la mesure de la première valeur de la capacité et des valeurs suivantes :
a. Cas N°1 :
   - Tant que la première valeur mesurée de capacité est de l'ordre d'une valeur seuil préenregistrée (et pouvant être recalibrée) (par exemple de 150 pF) et que la pente de la courbe, c'est-à-dire la dérivée de la fonction, reste nulle dans le temps, il y a absence de buée ;
   - lorsque la pente change (la valeur de la dérivée change) et n'est donc plus nulle, il y a donc détection d'une première rupture de pente, le risque de buée est alors détecté ;
   - lorsque la pente différente de zéro change à nouveau (la dérivée change encore de valeur, en particulier selon une valeur plus importante), il y a donc détection d'une seconde rupture de pente (en particulier avec une pente plus importante), cela correspond à la détection de présence de buée.
b. Cas N°2 : Si la première valeur mesurée de capacité est supérieure de manière significative à au moins une valeur seuil préenregistrée, et que la pente de la courbe reste nulle dans le temps, il y a alors risque de buée ou présence de buée. Avantageusement, deux valeurs seuil de capacité sont préenregistrées, l'une étant inférieure à l'autre et la seconde valeur seuil correspondant à une valeur de capacité pour laquelle l'humidité risque d'être fortement présente. Pour confirmer la présence de buée, la valeur de capacité mesurée peut être corrélée avec une valeur de température qui est généralement accessible car un capteur de température est toujours présent dans un véhicule. Néanmoins, la mesure de température n'est pas systématique dans le capteur d'humidité capacitif de l'invention à la fois à fonction prédictive et de détection.

Dans le cas N°1, à la détection de la première rupture de pente, l'unité de commande 3 est apte à déclencher le HVAC en mettant en fonctionnement un élément chauffant du vitrage (couche chauffante ou fils chauffants) et/ou la ventilation pour anticiper la présence de buée. En fonction de l'évolution de la valeur de la capacité (de l'évolution de l'humidité relative) dans le temps, l'unité de commande 3 régule le HVAC de manière appropriée. Si une seconde rupture de pente est détectée, et que la pente est positive, de la buée est alors détectée, le chauffage n'était alors pas assez puissant et l'unité de commande 3 est apte en contrôlant de manière adaptée le HVAC à supprimer la buée. Si après la mise en route du HVAC (éventuellement de manière plus puissante lorsque la buée a été détectée), la courbe de la capacité présente à nouveau une pente nulle, l'unité de commande 3 en déduira qu'il n'y a plus de buée et pourra stopper le HVAC, tout en pouvant détecter en fonction de la valeur de la capacité qu'il peut encore y avoir un risque de buée.

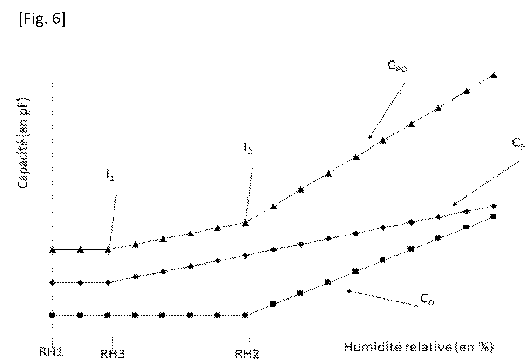

Pour illustrer le fonctionnement du capteur d'humidité capacitif 2 faisant partie de l'ensemble selon la présente invention qui possède les fonctions combinées de détection de présence de buée et de prédiction du risque de buée, la figure 6 montre schématiquement l'évolution de la capacité en fonction de l'humidité pour le capteur d'humidité capacitif 2 faisant partie de l'ensemble selon la présente invention ainsi que pour un capteur d'humidité capacitif de détection seul et un capteur d'humidité capacitif de prédiction seul. Chaque courbe est l'une au-dessus de l'autre pour en faciliter la lecture. L'humidité relative exprimée débute à une valeur RH1. Les trois capteurs d'humidité capacitif, celui qui constitue une partie de l'ensemble selon la présente invention, celui de détection et celui prédictif comportent chacun la même nature d'électrodes 20 et 21 (à partir de pâte d'argent et de frittes de verre), et de longueur 70 mm pour les électrodes du capteur faisant partie de l'ensemble selon la présente invention, 35 mm pour le capteur de détection et 35 mm pour le capteur de prédiction. Le capteur prédictif et le capteur faisant partie de l'ensemble selon la présente invention comportent la même couche hygroscopique 24 en PVP de 20 µm d'épaisseur, avec pour le capteur prédictif un recouvrement total des électrodes, c'est-à-dire un recouvrement de toute la partie d'imbrication des électrodes l'une dans l'autre, et pour le capteur faisant partie de l'ensemble selon la présente invention un recouvrement à 50% de la longueur des électrodes.

On constate que pour la courbe C_{D} qui correspond au capteur d'humidité capacitif de détection, la pente reste nulle et un seul changement brutal de pente intervient à une valeur RH2 d'humidité (supérieure à RH1), signifiant que de la buée présente sur le vitrage est détectée. En revanche, ce capteur d'humidité capacitif de détection n'a pas permis d'anticiper la formation de la buée.

Pour la courbe C_{P} qui correspond au capteur d'humidité capacitif prédictif, la pente reste nulle et un seul changement brutal de pente intervient à une valeur RH3 d'humidité (RH3 est supérieur à RH1 et inférieure à RH2). Le changement de pente intervient bien avant celui de la courbe C_{D}, ce qui est normal puisque le capteur par sa fonction prédictive a détecté l'augmentation d'humidité plus rapidement du fait de l'absorption des molécules d'eau par la couche hygroscopique. Cependant, après la rupture de pente, la pente reste la même ne permettant pas de détecter lorsque la buée devient présente sur le vitrage (lorsque l'humidité atteint la valeur RH2).

Pour la courbe C_{PD} qui correspond au capteur d'humidité capacitif 2 de l'invention, on constate une pente nulle, puis une première rupture de pente en un premier point d'inflexion I₁ et enfin une seconde rupture de pente en un second point d'inflexion I₂. La première rupture de pente correspond à la prédiction que de la buée peut se former et est en cohérence avec la courbe C_{P} du capteur d'humidité capacitif prédictif avec le premier point d'inflexion également à la valeur RH3 d'humidité relative. La première pente à partir du premier point d'inflexion I₁ correspond à l'absorption d'humidité par la couche hygroscopique 24. La seconde rupture de pente correspond à la détection de buée et est en cohérence avec la courbe C_{D} du capteur d'humidité capacitif de détection avec le second point d'inflexion I₂ également à la valeur RH2 d'humidité relative. La seconde pente à partir du second point d'inflexion I₂ est plus importante que la pente de la courbe C_{D} du capteur d'humidité capacitif de détection car la capacité correspond à l'addition de la capacité mesurée entre les électrodes 20 et 21 recouvertes de la couche hygroscopique 24 et la capacité mesurée des électrodes 20 et 21 sans la couche hygroscopique 24.

Par conséquent, avec l'unique capteur d'humidité capacitif 2 faisant partie de l'ensemble selon la présente invention et donc un seul signal, en particulier en n'utilisant uniquement que deux électrodes qui sont partiellement recouvertes d'une couche hygroscopique, il est possible de prédire le risque d'apparition de buée et d'agir de manière automatisée (permettant ainsi un gain d'économie) via l'unité de commande 3 qui contrôle le HVAC pour empêcher la formation de buée, et il est également possible de détecter de la buée dès la mise en fonctionnement du capteur (à l'allumage de l'unité de commande électronique 3), ou de détecter de la buée ultérieurement à la prédiction lorsque par exemple la régulation du HVAC n'a pas été suffisante et/ou que l'humidité a augmenté bien plus rapidement que prévu (notamment si plusieurs personnes sont montées dans le véhicule alors que le froid à l'extérieur du véhicule était conséquent), le HVAC étant ensuite piloté en conséquence.

## Revendications

1. Ensemble comprenant un vitrage (1) et des moyens de traitement électroniques, le vitrage (1) comportant au moins un capteur d'humidité capacitif (2) à fonction de détection d'humidité comportant deux électrodes espacées (20, 21), les deux électrodes (20, 21) sont imbriquées l'une dans l'autre tout en étant espacées, en formant des peignes ou des spirales ou des serpentins ou des formes géométriques avec des méandres, ledit capteur d'humidité capacitif (2) à fonction de détection est également à fonction de prédiction d'humidité, **caractérisé en ce que** le capteur d'humidité capacitif (2) comporte un revêtement hygroscopique (24) qui recouvre partiellement les deux électrodes (20, 21), **en ce que** le revêtement hygroscopique (24) s'étend sur une longueur des électrodes qui correspond de 25% à 75 % de la longueur des électrodes, en particulier qui correspond à 50% de la longueur des électrodes, et **en ce que** les moyens de traitement électroniques sont configurés pour effectuer les étapes suivantes :
- enregistrer les données de mesure du capteur d'humidité capacitif au cours du temps, analyser les valeurs de la capacité dans le temps et l'évolution des valeurs de la capacité en fonction de l'humidité relative, et calculer la pente de cette fonction au cours du temps en fonction de la succession des valeurs de capacité mesurées ; et
- déduire le risque de formation de buée ou la présence de buée en fonction de la pente et de la valeur de la capacité à l'instant t .

2. Ensemble selon la revendication 1, **caractérisé en ce que** une seule zone en continu selon une partie de la longueur des deux électrodes est recouverte par le revêtement hygroscopique.

3. Ensemble selon la revendication précédente, **caractérisé en ce que** chaque électrode (20, 21) comporte un point de connexion électrique (22, 23) et **en ce que** le revêtement hygroscopique (24) se situe du côté des points de connexion électrique (22, 23) des électrodes.

4. Ensemble selon l'une quelconque des revendications 2 à 3, **caractérisé en ce que** le revêtement hygroscopique (24) présente une épaisseur comprise dans une gamme de de 5 à 50 µm, de préférence de 10 à 20 µm.

5. Ensemble selon l'une quelconque des revendications 2 à 4, **caractérisé en ce que** le revêtement hygroscopique (24) est une couche polymérique à base d'alcool polyvinylique (PVA), ou de polyvinylpyrrolidone (PVP), ou de polyamide(s), éventuellement comprenant en outre un électrolyte tel que du polystyrène sulfonate de sodium (PSSD), ou du chlorure de sodium (NaCl) ou du benzènedisulfonate de disodium (MBSD), ou du dioctyl sulfosuccinate de sodium (DOSS NA).

6. Ensemble selon l'une quelconque des revendications précédentes, **caractérisé en ce que** les deux électrodes (20, 21) sont à base d'encre électriquement conductrice ou de pâte électriquement conductrice telle que de la pâte de carbone ou de la pâte à base d'argent.

7. Ensemble selon l'une quelconque des revendications 1 à 5, **caractérisé en ce que** les deux électrodes (20, 21) sont un revêtement électriquement conducteur transparent tel qu'une encre transparente électriquement conductrice déposée par impression, ou tel qu'une couche électriquement conductrice à base d'un oxyde conducteur transparent, de préférence la couche étant déposée par pulvérisation cathodique assistée par champ magnétique et l'espace entre les deux électrodes qui constitue une zone d'isolement électrique étant réalisé par décapage laser.

8. Ensemble selon l'une quelconque des revendications précédentes, **caractérisé en ce que** les deux électrodes (20, 21) sont espacées avec le même écartement selon toute leur longueur, et l'espace entre les deux électrodes est dans une gamme comprise entre 200 et 500 µm.

9. Ensemble selon l'une quelconque des revendications précédentes, **caractérisé en ce que** la largeur de chaque électrode (20, 21) est dans une gamme comprise entre 200 et 500 µm.

10. Ensemble selon l'une quelconque des revendications précédentes, **caractérisé en ce que** le vitrage est un vitrage de véhicule, en particulier de véhicule automobile, ledit capteur d'humidité capacitif (2) à fonctions prédictive et de détection étant agencé sur la face du vitrage pour laquelle la prédiction et la détection d'humidité sont souhaitées.

11. Ensemble selon la revendication 10, **caractérisé en ce que** deux capteurs d'humidité capacitifs à fonctions prédictive et de détection sont agencés, respectivement, l'un sur la face externe dudit vitrage et l'autre sur la face interne.

## Patentansprüche

1. Baugruppe, umfassend eine Verglasung (1) und elektronische Verarbeitungsmittel, wobei die Verglasung (1) mindestens einen kapazitiven Feuchtigkeitssensor (2) mit Feuchtigkeitserfassungsfunktion aufweist, der zwei beabstandete Elektroden (20, 21) aufweist, wobei die zwei Elektroden (20, 21) ineinander verschachtelt sind, aber dennoch durch Ausbilden von Kämmen oder Spiralen oder Schlangen oder geometrischen Formen mit Mäandern beabstandet sind, wobei der kapazitive Feuchtigkeitssensor (2) mit Erfassungsfunktion ebenfalls eine Feuchtigkeitsvorhersagefunktion aufweist, **dadurch gekennzeichnet, dass** der kapazitive Feuchtigkeitssensor (2) eine hygroskopische Beschichtung (24) aufweist, die die zwei Elektroden (20, 21) teilweise bedeckt, **dadurch, dass** sich die hygroskopische Beschichtung (24) über eine Länge der Elektroden erstreckt, die 25 % bis 75 % der Länge der Elektroden entspricht, die insbesondere 50 % der Länge der Elektroden entspricht, **und dadurch, dass** die elektronischen Verarbeitungsmittel zum Ausführen der folgenden Schritte konfiguriert sind:
- Aufzeichnen der Messdaten des kapazitiven Feuchtigkeitssensors über die Zeit, Analysieren der Kapazitätswerte in der Zeit und der Entwicklung der Kapazitätswerte in Abhängigkeit von der relativen Feuchtigkeit, und Berechnen der Steigung dieser Funktion über die Zeit in Abhängigkeit von der Abfolge der gemessenen Kapazitätswerte; und
- Ableiten des Risikos der Beschlagausbildung oder des Vorhandenseins von Beschlag in Abhängigkeit von der Steigung und dem Wert der Kapazität zu dem Zeitpunkt t.

2. Baugruppe nach Anspruch 1, **dadurch gekennzeichnet, dass** eine einzige kontinuierliche Zone entlang eines Teils der Länge der zwei Elektroden durch die hygroskopische Beschichtung bedeckt ist.

3. Baugruppe nach dem vorstehenden Anspruch,
**dadurch gekennzeichnet, dass** jede Elektrode (20, 21) einen elektrischen Anschlusspunkt (22, 23) aufweist, **und dadurch, dass** die hygroskopische Beschichtung (24) sich auf der Seite der elektrischen Anschlusspunkte (22, 23) der Elektroden befindet.

4. Baugruppe nach einem der Ansprüche 2 bis 3,
**dadurch gekennzeichnet, dass** die hygroskopische Beschichtung (24) eine Dicke vorweist, die in einem Bereich von 5 bis 50 µm, vorzugsweise von 10 bis 20 µm liegt.

5. Baugruppe nach einem der Ansprüche 2 bis 4,
**dadurch gekennzeichnet, dass** die hygroskopische Beschichtung (24) eine polymere Schicht auf Basis von Polyvinylalkohol (PVA) oder von Polyvinylpyrrolidon (PVP) oder von Polyamid(en) ist, gegebenenfalls ferner umfassend einen Elektrolyten wie Natriumpolystyrolsulfonat (PSSD) oder Natriumchlorid (NaCl) oder Dinatriumbenzoldisulfonat (MBSD) oder Natriumdioctylsulfosuccinat (DOSS NA).

6. Baugruppe nach einem der vorstehenden Ansprüche,
**dadurch gekennzeichnet, dass** die zwei Elektroden (20, 21) auf Basis einer elektrisch leitfähigen Tinte oder einer elektrisch leitfähigen Paste sind, wie Kohlenstoffpaste oder Paste auf Basis von Silber.

7. Baugruppe nach einem der Ansprüche 1 bis 5,
**dadurch gekennzeichnet, dass** die zwei Elektroden (20, 21) eine transparente elektrisch leitfähige Beschichtung sind, wie eine transparente elektrisch leitfähige Tinte, die durch Drucken aufgebracht wird, oder wie eine elektrisch leitfähige Schicht auf Basis eines transparenten leitfähigen Oxids, vorzugsweise wobei die Schicht durch magnetfeldunterstützte Kathodenzerstäubung aufgebracht wird und der Raum zwischen den zwei Elektroden, der eine elektrische Isolationszone ausbildet, durch Laserabtragung realisiert wird.

8. Baugruppe nach einem der vorstehenden Ansprüche,
**dadurch gekennzeichnet, dass** die zwei Elektroden (20, 21) über ihre gesamte Länge mit demselben Zwischenraum beabstandet sind, und der Abstand zwischen den zwei Elektroden in einem Bereich zwischen 200 und 500 µm liegt.

9. Baugruppe nach einem der vorstehenden Ansprüche,
**dadurch gekennzeichnet, dass** die Breite jeder Elektrode (20, 21) in einem Bereich zwischen 200 und 500 µm liegt.

10. Baugruppe nach einem der vorstehenden Ansprüche,
**dadurch gekennzeichnet, dass** die Verglasung eine Fahrzeugverglasung, insbesondere eine Kraftfahrzeugverglasung ist, wobei der kapazitive Feuchtigkeitssensor (2) mit Vorhersage- und Erfassungsfunktionen auf der Seite der Verglasung angeordnet ist, für die die Vorhersage und die Erfassung von Feuchtigkeit gewünscht sind.

11. Baugruppe nach Anspruch 10, **dadurch gekennzeichnet, dass** zwei kapazitive Feuchtigkeitssensoren mit Vorhersage- und Erfassungsfunktionen angeordnet sind, jeweils einer auf der Außenoberfläche der Verglasung und der andere auf der Innenoberfläche.

## Claims

1. An assembly comprising a glazing (1) and electronic processing means, the glazing comprising at least one capacitive humidity sensor (2) with a humidity detection function comprising two electrodes (20, 21) spaced apart, the two electrodes (20, 21) being interleaved with each other while being spaced apart, forming combs or spirals or serpentines or geometric shapes with meanders, said capacitive humidity sensor (2) with a detection function also has a humidity prediction function, **characterized in that** the capacitive humidity sensor (2) comprises a hygroscopic coating (24) which partially covers the two electrodes (20, 21), **in that** the hygroscopic coating (24) extends over a length of the electrodes which corresponds to 25% to 75% of the length of the electrodes, in particular which corresponds to 50% of the length of the electrodes, and **in that** the electronic processing means are configured to perform the following steps:
- recording the measurement data from the capacitive humidity sensor over time, analyzing the capacitance values over time and the evolution of the capacitance values as a function of relative humidity, and calculating the slope of this function over time as a function of the sequence of measured capacitance values; and
- deducing the risk of fogging or the presence of fog based on the slope and the capacitance value at time t.

2. The assembly according to claim 1, **characterized in that** only one continuous area along part of the length of the two electrodes is covered by the hygroscopic coating.

3. The assembly according to the preceding claim, **characterized in that** each electrode (20, 21) has an electrical connection point (22, 23) and **in that** the hygroscopic coating (24) is located on the side of the electrical connection points (22, 23) of the electrodes.

4. The assembly according to any one of claims 2 to 3, **characterized in that** the hygroscopic coating (24) has a thickness in the range of 5 to 50 µm, preferably 10 to 20 µm.

5. The assembly according to any one of claims 2 to 4, **characterized in that** the hygroscopic coating (24) is a polymeric layer based on polyvinyl alcohol (PVA), or polyvinylpyrrolidone (PVP), or polyamide(s), optionally further comprising an electrolyte such as sodium polystyrenesulfonate (PSSD), or sodium chloride (NaCl), or disodium benzenedisulfonate (MBSD), or sodium dioctyl sulfosuccinate (DOSS NA).

6. The assembly according to any of the preceding claims, **characterized in that** the two electrodes (20, 21) are based on electrically conductive ink or electrically conductive paste such as carbon paste or silver paste.

7. The assembly according to any one of claims 1 to 5, **characterized in that** the two electrodes (20, 21) are a transparent electrically conductive coating such as a transparent electrically conductive ink deposited by printing, or such as an electrically conductive layer based on a transparent conductive oxide, preferably the layer being deposited by magnetic field-assisted sputtering and the space between the two electrodes, which constitutes an electrically insulating zone, being produced by laser etching.

8. The assembly according to any of the preceding claims, **characterized in that** the two electrodes (20, 21) are spaced with the same spacing along their entire length, and the space between the two electrodes is in the range of 200 to 500 µm.

9. The assembly according to any one of the preceding claims, **characterized in that** the width of each electrode (20, 21) is in a range of between 200 and 500 µm.

10. The assembly according to any one of the preceding claims, **characterized in that** the glazing is a vehicle glazing, in particular for a motor vehicle, said capacitive humidity sensor (2) with predictive and detection functions being arranged on the face of the glazing for which humidity prediction and detection are desired.

11. The assembly according to claim 10, **characterized in that** two capacitive humidity sensors with predictive and detection functions are arranged, respectively, one on the external face of said glazing and the other on the internal face.
